# FASCICULE DE BREVET EUROPEEN

(11) **EP 2 225 522 B1**
(45) Date de publication et mention de la délivrance du brevet: **06.12.2017**
(21) Numéro de dépôt: 08864582.5
(22) Date de dépôt: 12.12.2008
(51) Int. Cl.: F27D 1/10, B04C 5/085, B05D 7/22, B01J 8/00, C10G 11/18, C04B 28/06, C04B 14/48

(54) **PROCÉDÉ POUR LE REVÊTEMENT ANTI-ÉROSION D'UNE PAROI, REVÊTEMENT ANTI-ÉROSION ET SON UTILISATION**
VERFAHREN FÜR DIE EROSIONSSCHUTZBESCHICHTUNG EINER WAND, EROSIONSSCHUTZBESCHICHTUNG UND IHRE VERWENDUNG
METHOD FOR THE ANTI-EROSION COATING OF A WALL, ANTI-EROSION COATING AND USE THEREOF

(30) Priorité: 21.12.2007 FR 0709022
(43) Date de publication de la demande: 08.09.2010
(73) Titulaire: Total Raffinage France, 92400 Courbevoie (FR)
(72) Inventeur: BELGHAZI, Ahmed, F-69530 Brignais (FR); LEAL, Luis Miguel, F-69500 Bron (FR); LAPALUS, Jacques, F-69003 Lyon (FR)
(74) Mandataire: Largeau, Béatrice
(86) Numéro de dépôt international: PCT/FR2008/052298
(87) Numéro de publication internationale: WO 2009/081011

(56) Documents cités:
- EP-A- 0 413 599
- DE-A1- 19 724 509
- JP-A- 55 027 007
- JP-A- 62 234 560
- CHEMICAL ABSTRACTS + INDEXES, AMERICAN CHEMICAL SOCIETY. COLUMBUS, US, 1 janvier 1900 (1900-01-01), XP000184200 ISSN: 0009-2258

## Description

La présente invention concerne un procédé pour le revêtement anti-érosion d'une paroi, généralement constituée en un matériau solide. Elle concerne également un revêtement anti-érosion, notamment obtenu avec ce procédé, ainsi que l'utilisation de ce revêtement.

L'invention concerne en particulier un procédé pour la constitution d'un revêtement anti-érosion d'une paroi d'un cyclone, dispositif destiné à séparer et récupérer des particules solides entraînées par un fluide.

Plus précisément, l'invention se rapporte à un procédé pour constituer un revêtement anti-érosion sur une paroi métallique, le revêtement anti-érosion obtenu avec ce procédé, ainsi que l'utilisation d'un tel revêtement lorsqu'il est appliqué sur la paroi interne d'un cyclone, généralement utilisé dans le domaine du raffinage et de la pétrochimie, notamment dans une unité de Craquage Catalytique Fluide (ou FCC, pour « Fluid Catalytic Cracking » en anglais).

C'est à cette application du FCC que l'on se référera plus particulièrement dans la suite de la présente description, mais le procédé objet de l'invention s'applique à tout type de paroi solide, quelle que soit sa forme, sur laquelle il est utile d'appliquer une protection pour éviter une érosion destructrice, par exemple due aux impacts de particules solides entraînées à grande vitesse par un fluide, ou plus généralement due à tout type d'impacts, quelles que soient leurs origines, sur une paroi solide.

Le craquage catalytique en lit fluide (FCC) est un procédé chimique, fréquemment utilisé dans les raffineries de pétrole, dont le but est de transformer les coupes lourdes à longues chaînes d'hydrocarbures, par exemple issues de la distillation sous vide du pétrole, en coupes plus légères et plus valorisables. Une haute température associée à la présence d'un catalyseur spécifique, une légère surpression par rapport à la pression atmosphérique, permet de craquer (casser) les grosses molécules hydrocarbonées pour produire de plus petites molécules présentant une valorisation importante, par exemple dans la chaîne de fabrication des produits pétroliers.

Le catalyseur généralement utilisé est une zéolithe avec des substitutions cationiques de terres rares maintenues au sein d'une matrice silice-alumine amorphe. Grâce aux dimensions extrêmement faibles de ses grains (de l'ordre d'une cinquantaine de microns) ledit catalyseur peut être mis en mouvement « fluide » ou « quasi-fluide » dans le FCC.

Dans le processus FCC, la charge à traiter et le catalyseur sont introduits ensemble dans un réacteur dont la température peut atteindre plusieurs centaines de degrés centigrades, par exemple 500°C. Les effluents formés au cours de la réaction chimique sont débarrassés des entraînements de catalyseur dans un ou plusieurs cyclones disposés dans la partie supérieure du réacteur, puis sont ensuite envoyés dans une colonne de fractionnement.

La réaction chimique produite dans le réacteur du FCC entraîne la formation de dépôts de coke sur le catalyseur. Ceci impose une régénération permanente de ce catalyseur. C'est à cet effet qu'il est prévu dans le FCC, et en continu, un écoulement du catalyseur coké vers un régénérateur dans lequel est soufflé de l'air de combustion, à une température d'environ 700°C, pour brûler le coke. Le catalyseur ainsi régénéré, pouvant être assimilé à un catalyseur neuf, est ensuite réinjecté à la charge fraîche à l'entrée du réacteur.

C'est ce mouvement continu et fluide de régénération du catalyseur qui donne son nom au procédé FCC.

Bien que le catalyseur débarrassé de son coke soit évacué en continu en partie basse du régénérateur, il subsiste des quantités non négligeables de particules solides dudit catalyseur entraînées en sortie haute dudit régénérateur par le gaz de combustion contenant notamment du gaz carbonique (CO₂), de l'azote (N₂) et de l'oxyde de carbone (CO). Ce gaz de combustion est ensuite traité par différents moyens dans des unités de récupération d'énergie pour abaisser sa température, puis est éjecté à la cheminée. Il est extrêmement important que les particules de catalyseur soient absentes quasi-totalement, voire totalement de ce gaz de combustion, ce qui requiert la présence en sortie haute du régénérateur d'un dispositif adapté de séparation et de récupération de ces particules. De la même manière que dans le réacteur et pour la séparation des particules de catalyseur avec les effluents formés pendant la réaction de craquage, c'est au moins un cyclone qui est utilisé dans le régénérateur, de préférence deux cyclones primaires installés en série avec deux cyclones secondaires pour séparer et récupérer les particules de catalyseur contenues dans le gaz de combustion.

Ces cyclones ont donc un rôle primordial dans le processus de craquage catalytique, notamment au niveau de la qualité des effluents de sortie de la zone réactionnelle et/ou pour le traitement du gaz de combustion en sortie du régénérateur, permettant d'assurer ainsi dans ce dernier cas, une pollution par le catalyseur à la sortie de la cheminée de ce dit gaz de combustion très faible, voire nulle.

Dans un FCC, certains cyclones, qui sont des dispositifs statiques permettant de séparer et récupérer les particules solides de catalyseurs entraînées par un flux gazeux fonctionnant sur le principe du double vortex, peuvent présenter le problème de subir une érosion. En effet, leurs parois métalliques étant constamment exposées aux impacts de ces particules animées d'une importante énergie, des phénomènes d'érosion peuvent se produire, et dans des cas extrêmes entraîner, pendant la durée de fonctionnement du cyclone, un percement de l'acier le constituant, par exemple de l'acier inoxydable 304 H.

En effet, sans vouloir être lié par cette théorie, il est possible que dans de tels cyclones, le gaz chargé de particules arrivant à une vitesse pouvant atteindre plusieurs dizaines de mètres par seconde, par exemple 15 m/s à 30 m/s dans l'entrée dudit cyclone (dénommée l'« ouïe » ou le « pavillon » dans la profession) forme, de par la géométrie de ce cyclone, un vortex qui apporte de l'énergie aux différents impacts des particules solides de catalyseur sur les parois internes, créant ainsi une érosion non souhaitée, notamment dans le pavillon du cyclone, sur le corps du cyclone, le pot à poussière, voire même les dipleg. Cette érosion pouvant conduire à un ou plusieurs percements.

Le percement d'une paroi d'un cyclone peut provoquer des perturbations importantes dans le fonctionnement du FCC, provoquant des émissions préalables non désirées de particules solides de catalyseurs dans l'atmosphère, pouvant nécessiter in fine l'arrêt du FCC.

Des solutions ont été proposées dans l'art antérieur dans le but de retarder, minimiser, voire éviter, cette érosion sur les parois internes des cyclones, en équipant ces parois internes d'un revêtement spécifique anti-érosion.

C'est ainsi que US 4 943 544 divulgue la composition d'un matériau composite réfractaire de haute qualité qui possède une basse porosité, une haute densité, une bonne résistance mécanique ainsi qu'une haute résistance à l'érosion. Ce matériau est destiné à protéger toute surface devant présenter une grande résistance à l'érosion et une conductivité thermique basse. Il n'est pas indiqué dans ce document le procédé pour obtenir ce type de protection, notamment celui qui permet de protéger le pavillon, le corps du cyclone, la cheminée, le pot à poussières ou encore les dipleg.

De nombreux dispositifs d'ancrages, métalliques ou fabriqués en matériaux composites, du revêtement anti-érosion sur une paroi interne métallique sont décrits dans l'art et notamment dans WO 97/03 322, US 6 887 551, US 6 374 563, US 4 753 053, US 4 680 908, US 4 660 343 et US 4 581 867. Ces dispositifs d'ancrage ont tous leurs particularités de forme et de fonctionnement avec un même objectif, celui d'assurer l'ancrage du revêtement anti-érosion sur son support, généralement une paroi métallique.

Le document EP 0 413 599 A1 décrit un système de matériau réfractaire pour une paroi de cyclone séparateur dans lequel une pluralité de blocs de matériau réfractaire résistants à l'érosion s'étendent à distance des tubes de circulation de vapeur d'eau de la paroi du cyclone séparateur. Ces blocs sont attachés à une ailette continue s'étendant entre chaque paire de tubes adjacents. Le matériau isolant réfractaire résistant à l'érosion s'étend entre les ailettes et les blocs d'usure.

Les revêtements anti-érosions aujourd'hui généralement installés dans les craqueurs catalytiques, et plus précisément sur certaines parois internes des cyclones, sont constitués d'un maillage hexagonal métallique déployé en forme de nid d'abeilles appelé Hexmetal® et commercialisé par exemple par la société Causeway. Le maillage hexagonal, constitué d'alvéoles dont les dimensions internes peuvent varier de 4 à 6 cm pour une épaisseur d'environ 1,5 à 3,0 cm, est soudé multipoints sur la paroi à protéger de façon à revêtir l'ensemble de la paroi interne du cyclone. On ancre ainsi le maillage sur la paroi par une série de soudures des alvéoles, voire une alvéole sur deux. Les différentes soudures sont réalisées par du personnel spécialisé, généralement sur un cyclone déposé ou partiellement déposé. Les alvéoles sont remplies de matériau composite, généralement du béton, manuellement avec le pouce, et lissé à la truelle, par ledit personnel. Cette opération manuelle est rendue nécessaire par la nécessité de ne pas emprisonner de l'air entre la paroi interne et le béton. En effet, la présence d'air pourrait, compte tenu des températures de fonctionnement du cyclone, faire exploser par dilatation la maille emplie de béton ou créer des cratères, après érosion partielle, propices à la génération de turbulences néfastes au bon fonctionnement du cyclone. Cette condition est tellement importante qu'il est parfois utilisé un marteau pneumatique pour tasser le béton au fond et dans son alvéole.

Le temps de pose de cette technique de revêtement est compris en général entre 1 et 3 heures par m².

De plus, compte tenu de l'exiguïté intérieure des cyclones, les manipulations de soudure, voire de découpage à l'aide d'une meule à l'intérieur de celui-ci, sont rendues délicates et difficiles, y compris celles de remplissage des alvéoles par le béton, notamment eu égard à l'agressivité de ce dernier matériau.

Malgré ce type de revêtement anti-érosion préalablement décrit, il peut arriver que la paroi métallique d'un cyclone (le cyclone primaire) se perce, après érosion préalable totale du béton et de l'Hexmetal®. Ceci peut se produire après 4 à 5 ans de fonctionnement en continu. Un tel percement, entraînant de facto une surcharge de particules solides de catalyseur dans les autres cyclones, peut entraîner lorsque des cyclones secondaires sont présents dans l'installation, le percement de ces cyclones secondaires.

D'autres phénomènes d'érosion peuvent apparaître au fil du temps de fonctionnement, par exemple une érosion privilégiée par les particules solides de catalyseur au niveau de la maille métallique (l'épaisseur) de l'Hexmetal®, cette épaisseur de maille métallique se situant à la jonction de deux alvéoles emplies de béton. Cette érosion, une fois constituée, favorise l'usure du béton des alvéoles adjacentes, pouvant entraîner la disparition totale du béton et à terme l'érosion puis le percement de la paroi métallique.

A l'arrêt de l'installation, il est alors nécessaire de procéder au remplacement du béton et de l'Hexmetal®. Ceci peut être effectué par exemple, par hydro-démolition du béton, burinage de l'Hexmetal®, lissage des parois à la meule et nettoyage, installation (soudures) d'un Hexmetal® neuf, chargement du béton à la main, etc. La dépose de l'Hexmetal® peut se faire également à la meule mais ce travail est rendu dangereux pour le personnel, notamment compte tenu de l'exiguïté de l'intérieur d'un cyclone.

La durée de dépose d'un Hexmetal® endommagé d'un cyclone, habituellement rencontré dans une unité de craquage catalytique, est généralement supérieure à 15 jours, tandis que le temps de pose d'un nouvel y compris son chargement en béton, est estimé à environ un mois pour un cyclone de taille moyenne habituellement rencontré dans les unités de FCC.

Il en résulte donc que de nombreux inconvénients sont liés à ce type de revêtement parmi lesquels,
- la difficulté de mise en place de l'Hexmetal® sur la paroi métallique due à la nécessité de réaliser de nombreuses soudures,
- la difficulté d'introduction manuelle du béton dans chacune des alvéoles formée dans l'Hexmetal®,
- le temps de mise en oeuvre par du personnel spécialisé pour la réalisation des tâches ci-dessus énoncées,
- la qualification du personnel pour ce type de chantier,
- le coût résultant d'une éventuelle dépose d'un revêtement érodé lors d'un précédent cycle de fonctionnement, auquel il faut ajouter celui de la pose du nouveau revêtement tel que défini ci-dessus, et
- la dépense importante qu'il faut ajouter à celles inhérentes au remplacement d'un revêtement anti-érosion, à savoir le manque à gagner de l'exploitant pendant la période d'intervention.

Par ailleurs, la mise en place conforme aux bonnes règles de la profession, d'un revêtement anti-érosion constitué par de l'Hexmetal® et un béton de remplissage des alvéoles adapté, n'est pas un gage de tenue dans le temps, car il n'est pas rare d'observer que pour certains cyclones, notamment secondaires, la paroi métallique soit percée après une érosion locale totale du revêtement, ceci intervenant après 4 ou 5 années de fonctionnement, voire 3 années.

La Demanderesse a essayé, au cours de ses nombreuses recherches dans le domaine, de remédier en tout ou partie aux problèmes décrits ci-dessus en modifiant la nature du revêtement et en proposant un procédé d'application non en usage pour ce type d'installation.

Selon un aspect, la présente invention a pour objet un procédé de revêtement anti-érosion d'une paroi d'un cyclone destiné à séparer et récupérer des particules solides entraînées par un fluide, selon la revendication 1, dans lequel un matériau composite est déposé dans un moule constitué de la paroi du cyclone à protéger de l'érosion et un coffrage adapté, afin d'obtenir lors du démoulage une empreinte d'une géométrie déterminée, et au moins un moyen d'accrochage du matériau composite à la paroi du cyclone, solidaire de la dite paroi, est disposé préalablement au coulage dans l'épaisseur de l'empreinte.

Le procédé objet de la présente invention s'applique pour le revêtement anti-érosion de toute paroi, notamment d'un cyclone et plus généralement sur toute paroi métallique dont une face doit être protégée d'un agent agressif, notamment mécaniquement agressif. Ce procédé trouve un énorme intérêt pour le revêtement d'au moins une paroi interne d'un cyclone notamment installé dans une unité de craquage catalytique fluide des hydrocarbures.

Le matériau composite, au sens de la présente invention, est de préférence un matériau résultant d'un assemblage d'au moins deux matériaux non miscibles possédant une forte capacité d'adhésion. De préférence, le matériau composite est un matériau de construction composite tel que le béton, et de manière encore plus préférée un béton de type autocoulable.

Ce béton autocoulable peut présenter un rapport Al₂O₃/SiO₂ calculé sur une base calcinée, variant de 9 à 12 et de préférence de 10 à 11, et des caractéristiques physico-chimiques telles qu'il coule naturellement dans un moule sans nécessité d'utiliser un système de vibrations pour assurer son coulage dans les différentes parties dudit moule, même si ce dernier comporte des endroits particuliers nécessitant un remplissage non forcé dans le sens inverse à l'attraction terrestre.

Un tel béton autocoulable est à titre d'exemple le béton ACTCHEM 85 Trueflow distribué par la société Dramicon, encore appelé dans la suite de la présente description « béton autocoulable ». Ce béton autocoulable donne des résultats en tenues mécaniques, suivant la norme ASTM 704/A 704M-06, une à trois fois supérieurs à d'autres bétons habituellement utilisés pour des revêtement anti-érosions.

Selon un mode de réalisation préféré, le matériau de construction composite comporte en outre des aiguilles métalliques, pour renforcer sa tenue mécanique et limiter ses éventuelles microfissures. Identiques ou différentes, par exemple droites ou de forme oméga, les aiguilles peuvent avoir une longueur hors tout allant de 30 à 80 %, et de préférence de 50 à 80 % de l'épaisseur du revêtement anti-érosion, et un diamètre qui peut varier de 0,1 mm à 1,0 mm et de préférence de 0,2 mm à 0,7 mm.

Par « aiguille », on entend au sens de l'invention une tige métallique fine, constituée en un acier, de préférence inoxydable, et plus ou moins pointue à ses extrémités, distribuées par exemple par la société IRIS.

De préférence, les aiguilles sont mélangées au béton, notamment autocoulable, en proportion variant de 0,1 à 5,0 %, et de préférence de 0,1 à 3,0 % poids par rapport au poids total du béton.

La forme du moule est calculée et réalisée pour une excellente, voire parfaite, obtention au démoulage du produit fini, c'est-à-dire dans le cas de la présente invention, à la forme et à l'épaisseur du revêtement anti-érosion recherchée, une des faces du moule étant constituée par la paroi à revêtir.

L'épaisseur du revêtement anti-érosion, c'est-à-dire la distance séparant deux faces parallèles du moule varie de 10 à 100 mm et de préférence de 10 à 50 mm.

L'homme du métier adaptera en toute connaissance de cause les différentes contraintes de construction de ce moule, notamment sa constitution en plusieurs éléments, pour un démoulage aisé.

Le moule est constitué en tout matériau dur, et de préférence en métal, et de manière encore plus préférée en acier.

Toute forme pourra être donnée au revêtement anti-érosion par la constitution d'un moule spécifique, ce qui permet éventuellement par l'obtention au démoulage d'une empreinte adaptée, de modifier de façon simple la forme intérieure d'un cyclone sans intervenir sur son profil de construction initial.

Le moyen d'accrochage peut revêtir des formes multiples, avec 2, 3, 4, 5, 6, voire plus extrémités, et par exemple être en forme de X, V, T, Y, etc.

Dans un mode de réalisation de l'invention, le moyen d'accrochage, c'est-à-dire le moyen pour ancrer le revêtement anti-érosion à la paroi à protéger, est un vé dont la partie coudée est fixée, généralement par soudage sur la paroi, ce vé étant disposé dans l'épaisseur du moule préalablement au coulage du béton, notamment autocoulable, il sera ainsi au final disposé dans l'épaisseur du revêtement.

De préférence ce vé d'accrochage est métallique et est constitué en un acier de type inoxydable 304 H, sa hauteur mesurée perpendiculairement à la paroi interne, peut varier de 50 % à 80 %, et de préférence de 60 % à 75 % de l'épaisseur du revêtement anti-érosion. Son diamètre peut varier de 4 à 10 mm et de préférence de 4 à 8 mm.

Au moins un vé d'accrochage est nécessaire pour ancrer le revêtement anti-érosion à la paroi à protéger, mais on préférera disposer, préalablement au coulage, plusieurs vés par unité de surface de la paroi à protéger. C'est ainsi que le nombre de vés peut varier de 10 à 100 par m² et de préférence de 10 à 60 par m².

L'invention concerne également un revêtement anti-érosion pour paroi d'un cyclone selon la revendication 13, comprenant un matériau composite disposé en une couche continue sur la paroi interne du cyclone et au moins un moyen d'accrochage solidaire de la paroi dudit cyclone dans l'épaisseur du revêtement. En particulier, la surface exposée est lisse.

Bien entendu, le revêtement peut être obtenu suivant le procédé de mise en oeuvre, et/ou avec les constituants décrits précédemment.

Contrairement à l'utilisation de l'Hexmetal® où il existe des discontinuités entre les différentes alvéoles emplies de matériau composite, ces discontinuités étant dues à l'épaisseur du métal constituant l'Hexmetal®, le revêtement anti-érosion conformément à l'invention est disposé, par moulage, en une couche continue sans aucune discontinuité. De ce fait, et grâce à la technique de moulage, la surface exposée du béton aux particules solides est unie, et de préférence lisse.

Selon encore un autre aspect, l'invention a pour objet un cyclone selon la revendication 16 comprenant un revêtement selon l'invention.

En particulier, le cyclone est revêtu en interne presque totalement, soit au moins 95 %, en particulier au moins 99 %, voire au moins 99,9 % de la surface interne, ou totalement par un revêtement selon l'invention.

Ce revêtement est utilisé pour revêtir au moins une paroi interne d'un cyclone primaire ou secondaire, dans une unité de Craquage Catalytique Fluide d'une raffinerie de pétrole.

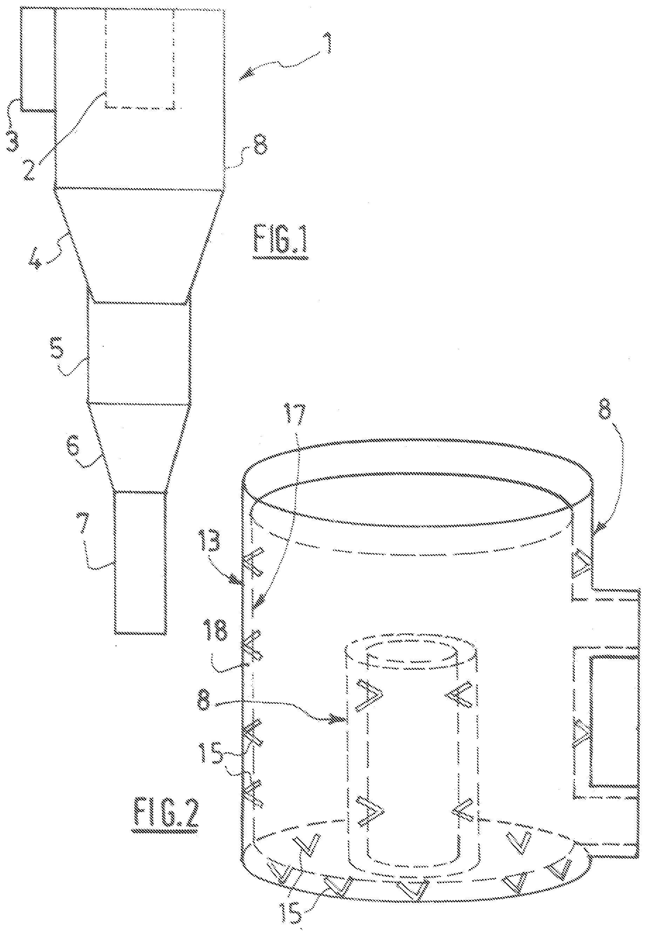

La présente invention est expliquée plus en détail à l'aide des figures 1 à 2, représentant une forme de réalisation d'un revêtement anti-érosion pour une paroi interne d'un cyclone, notamment la paroi interne du corps et de la cheminée d'un cyclone de FCC.

Dans cette description, on se référera aux dessins annexés dans lesquels :
La figure 1 est une vue générale schématique d'un cyclone utilisé dans un FCC selon l'invention.
La figure 2 est une vue schématique de la structure du revêtement des parties 2, 3 et 8 en moulage, du cyclone représenté à la figure 1.

La figure 1 est une vue générale schématique d'un cyclone de FCC selon l'invention. Le cyclone 1 comprend un pavillon 3 d'entrée d'un mélange de particules solides (ici des particules de catalyseur) et de gaz, et le corps du cyclone proprement dite 8, de forme sensiblement cylindrique, solidaire d'une partie inférieure 4, de forme conique évasée vers le haut. Cette partie conique 4 débouche sur un pot à poussière 5, de forme également sensiblement cylindrique lui-même solidaire d'une partie inférieure 6, de forme conique évasée vers le haut. Cette deuxième partie conique est solidaire d'une partie inférieure 7 (dipleg), sensiblement cylindrique, qui permet de recueillir les particules solides. Le corps du cyclone 8 comporte une partie cheminée 2 par laquelle sortent les gaz, en partie supérieure. Le principe de fonctionnement du cyclone 1 est que le mélange de particules et de gaz arrivant à très grande vitesse par le pavillon d'entrée 3, amorcent un mouvement tournant très rapide dans le corps du cyclone 8, ledit mouvement s'étendant jusqu'aux parties 4, 5, 6 et 7. Deux vortex sont ainsi créés dans le cyclone, un montant de densité faible correspondant au gaz et un autre descendant de densité plus élevée correspondant aux particules. Ces particules tombent ensuite dans la jambe 7, tandis que les gaz s'évacuent par la cheminée 2.

Il est courant dans la profession de dénommer :
- les parties 3, 8 et 4 comme « corps du cyclone »,
- la partie 2 comme « cheminée »,
- les parties 5 et 6 comme « pot à poussières », et enfin
- la partie 7 comme « Dipleg ».

La figure 2 est une vue schématique d'une disposition d'un moule pour une opération de coulage d'un béton autocoulable, conformément à la présente invention. Dans ce cas la partie 8, intégrant les parties 2 et 3 du cyclone a été déposée (dessoudée), retournée puis disposée sur une surface plane. Le moule a été constitué par au moins un ensemble extérieur 17 (seule la face interne du moule complémentaire à la paroi à revêtir est représentée sur la figure 2) permettant de dimensionner l'empreinte désirée, c'est-à-dire sa forme et son épaisseur 18 égale ici à 25 mm. Des vés sont disposés sur la paroi interne 13 à protéger, et servent à l'accrochage (l'ancrage) du béton sur la paroi 13. Les vés sont ici tous identiques, et comportent chacun deux parties sensiblement cylindriques pleines, formant un angle sensiblement égal à 90° l'une par rapport à l'autre. La hauteur des vés est comprise entre 15 et 20 mm, et le diamètre de chacune des deux parties sensiblement cylindriques est compris entre 5 et 8 mm. Ils ont été fixés sur la paroi 13 par soudage au niveau de leur partie coudée et sont au nombre de 50/m² L'utilisation du béton autocoulable, ici de l'Actchem 85 Trueflow dans lequel a été ajouté 0,5 % poids d'aiguilles en forme d'oméga, permet de remplir progressivement lors du coulage les espaces ménagés par le moule le long de la paroi interne de la partie 8 du cyclone, puis le fond et enfin, par remontée du béton les parois de la cheminée 2.

Après démoulage, le béton autocoulable est cuit conformément aux bonnes pratiques de la profession, afin de le disposer, préalablement à son montage définitif dans le FCC, dans des conditions de températures rencontrées habituellement en cycle de fonctionnement d'un cyclone de FCC.

Alors qu'il fallait environ un mois et demi pour reconstituer le revêtement anti-érosion d'un cyclone usagé de taille moyenne d'un FCC, avec du personnel spécialisé, comportant des risque par utilisations d'outillage spécifique, de soudure, de meulage dans un espace confiné (l'intérieur du cyclone), la mise en oeuvre de l'invention, permet de diviser par au moins 2 le temps d'immobilisation dudit cyclone en minimisant tous les risques ci-dessus énoncés pour le personnel.

La présente invention trouve, de plus, un grand intérêt dans la remise en état éventuelle du revêtement anti-érosion, conforme à la présente invention, par l'absence d' à déposer.

## Revendications

1. Procédé pour le revêtement anti-érosion de la paroi interne d'un cyclone (1) adapté aux unités de craquage catalytiques à lit fluidisé destiné à séparer et récupérer des particules solides entraînées par un fluide, **caractérisé en ce que**
- un matériau composite est déposé dans un moule constitué de la paroi interne du cyclone (13) à protéger de l'érosion et d'un coffrage adapté (17) en matériau dur, afin d'obtenir lors du démoulage une couche continue de revêtement anti-érosion sur ladite paroi interne, cette couche formant une empreinte d'une géométrie déterminée, et
- au moins un moyen d'accrochage (15) destiné au maintien dudit matériau composite sur ladite paroi interne du cyclone, est disposé solidaire de cette dernière , préalablement au coulage dans l'épaisseur de l'empreinte.

2. Procédé selon la revendication 1, **caractérisé en ce que** le matériau composite est un matériau de construction composite, de préférence un béton.

3. Procédé selon la revendication 2, **caractérisé en ce que** le béton est un béton autocoulable.

4. Procédé selon la revendication 3, **caractérisé en ce que** le rapport Al₂O₃/SiO₂ du béton autocoulable varie de 9 à 12 et de préférence de 10 à 11.

5. Procédé selon les revendications précédentes, **caractérisé en ce que** des aiguilles métalliques sont ajoutées au matériau composite.

6. Procédé selon la revendication 5, **caractérisé en ce que** la proportion d'aiguilles métalliques dans le matériau composite varie de 0,1 à 5,0 % poids, et de préférence de 0,1 à 3,0 % en poids.

7. Procédé selon la revendication 5 ou 6, **caractérisé en ce que** la longueur des aiguilles va de 30 à 80 % et de préférence de 50 à 80 % de l'épaisseur du revêtement anti-érosion.

8. Procédé selon les revendications 5 à 7, **caractérisé en ce que** le diamètre des aiguilles va de 0,1 mm à 1,0 mm et de préférence de 0,2 mm à 0,7 mm.

9. Procédé selon les revendications précédentes, **caractérisé en ce que** l'épaisseur du revêtement anti-érosion (18) varie de 10 mm à 100 mm et de préférence de 10 à 50 mm.

10. Procédé selon les revendications précédentes, **caractérisé en ce que** le revêtement anti-érosion est ancré à la paroi métallique par au moins un moyen d'accrochage, par exemple au moins un vé métallique (15), disposé dans l'épaisseur (18) dudit revêtement.

11. Procédé selon la revendication 10, **caractérisé en ce que** la hauteur du vé (15) varie de 50 % à 80 % et de préférence de 60 % à 75 %de l'épaisseur du revêtement anti-érosion.

12. Procédé selon la revendication 10, **caractérisé en ce que** le nombre des vés (15) varie de 10 à 100 par m² et de préférence de 10 à 60 par m².

13. Revêtement anti-érosion disposé en une couche continue de géométrie déterminée sur la paroi interne d'un cyclone d'une unité de craquage catalytique à lit fluidisé et présentant une surface exposée lisse, ce revêtement étant constitué d'un matériau composite, obtenu à partir d'un béton autocoulable comprenant un rapport Al₂O₃/SiO₂ variant de 9 à 12, et d'au moins un moyen d'accrochage solidaire de ladite paroi interne dans l'épaisseur du revêtement.

14. Revêtement anti-érosion selon la revendication 13 **caractérisé en ce qu'**il comprend de 0,1 à 5,0 % poids d'aiguilles métalliques dont la longueur va de 30 à 80% de l'épaisseur du revêtement anti-érosion.

15. Revêtement anti-érosion selon la revendication 13 ou 14 **caractérisé en ce qu'**il est obtenu selon l'une quelconque des revendications 1 à 12.

16. Cyclone (1) destiné aux unités de craquage catalytique à lit fluidisé dont la paroi interne est recouverte d'un revêtement selon l'une des revendications 13 à 15.

## Patentansprüche

1. Verfahren für die Erosionsschutzbeschichtung der Innenwand eines Zyklons (1), angepasst an fluidkatalytische Crackverfahrenseinheiten, bestimmt, feste Partikel zu separieren und wiederzugewinnen, die von einem Fluid mitgeführt werden, **dadurch gekennzeichnet, dass**
- ein Kompositmaterial in einer Form angeordnet wird, die von der vor Erosion zu schützenden Innenwand des Zyklons (13) und einer geeigneten Verschalung (17) aus hartem Material gebildet ist, um beim Entformen eine kontinuierliche Erosionsschutzbeschichtungsschicht auf der Innenwand zu erhalten, wobei diese Schicht einen Abdruck mit einer bestimmten Geometrie bildet, und
- mindestens ein Haftmittel (15), das für den Halt des Kompositmaterials auf der Innenwand des Zyklons bestimmt ist, vor dem Gießen in die Stärke des Abdrucks fest verbunden mit dieser angeordnet wird.

2. Verfahren nach Anspruch 1, **dadurch gekennzeichnet, dass** das Kompositmaterial ein Kompositbaumaterial, vorzugsweise ein Beton, ist.

3. Verfahren nach Anspruch 2, **dadurch gekennzeichnet, dass** der Beton ein selbstfließender Beton ist.

4. Verfahren nach Anspruch 3, **dadurch gekennzeichnet, dass** das Verhältnis Al₂O₃/SiO₂ des selbstfließenden Betons von 9 bis 12 und vorzugsweise von 10 bis 11 schwankt.

5. Verfahren nach den vorangehenden Ansprüchen, **dadurch gekennzeichnet, dass** dem Kompositmaterial Metallnadeln hinzugefügt werden.

6. Verfahren nach Anspruch 5, **dadurch gekennzeichnet, dass** der Anteil Metallnadeln in dem Kompositmaterial von 0,1 bis 5,0 Gew.-% und vorzugsweise von 0,1 bis 3,0 Gew.-% schwankt.

7. Verfahren nach Anspruch 5 oder 6, **dadurch gekennzeichnet, dass** die Länge der Nadeln von 30 bis 80% und vorzugsweise von 50 bis 80% der Stärke der Erosionsschutzbeschichtung schwankt.

8. Verfahren nach den Ansprüchen 5 bis 7, **dadurch gekennzeichnet, dass** der Durchmesser der Nadeln von 0,1 mm bis 1,0 mm und vorzugsweise von 0,2 mm bis 0,7 mm reicht.

9. Verfahren nach den vorangehenden Ansprüchen, **dadurch gekennzeichnet, dass** die Stärke der Erosionsschutzbeschichtung (18) von 10 mm bis 100 mm und vorzugsweise von 10 bis 50 mm schwankt.

10. Verfahren nach den vorangehenden Ansprüchen, **dadurch gekennzeichnet, dass** die Erosionsschutzbeschichtung an der metallischen Wand mittels mindestens eines Haftmittels verankert ist, beispielsweise mindestens eines metallischen V (15), das in der Stärke (18) der Beschichtung angeordnet ist.

11. Verfahren nach Anspruch 10, **dadurch gekennzeichnet, dass** die Höhe des V (15) von 50% bis 80% und vorzugsweise von 60% bis 75% der Stärke der Erosionsschutzbeschichtung schwankt.

12. Verfahren nach Anspruch 10, **dadurch gekennzeichnet, dass** die Anzahl der V (15) von 10 bis 100 pro m² und vorzugsweise von 10 bis 60 pro m² schwankt.

13. Erosionsschutzbeschichtung, die in einer kontinuierlichen Schicht mit bestimmter Geometrie auf der Innenwand eines Zyklons einer fluidkatalytischen Crackverfahrenseinheit angeordnet ist und eine glatte exponierte Oberfläche aufweist, wobei diese Beschichtung von einem Kompositmaterial, erhalten auf der Basis eines selbstfließenden Betons, umfassend ein Verhältnis Al₂O₃/SiO₂ von 9 bis 12, und mindestens einem Haftmittel, das mit der Innenwand in der Stärke der Beschichtung fest verbunden ist, gebildet ist.

14. Erosionsschutzbeschichtung nach Anspruch 13, **dadurch gekennzeichnet, dass** sie 0,1 bis 5,0 Gew.-% Metallnadeln umfasst, deren Länge von 30 bis 80% der Stärke der Erosionsschutzbeschichtung reicht.

15. Erosionsschutzbeschichtung nach Anspruch 13 oder 14, **dadurch gekennzeichnet, dass** sie nach einem der Ansprüche 1 bis 12 hergestellt wird.

16. Zyklon (1) für fluidkatalytische Crackverfahrenseinheiten, dessen Innenwand mit einer Beschichtung nach einem der Ansprüche 13 bis 15 bedeckt ist.

## Claims

1. A process for the anti-erosion coating of the internal wall of a cyclone (1) suitable for catalytic cracking units with fluidized bed for separating and recovering solid particles entrained by a fluid, **characterized in that**
- a composite material is placed in a mold consisting of the internal wall of the cyclone (13) to protect from erosion and of a suitable casing (17) in hard material in order to obtain, upon stripping, a continuous layer of the anti-erosion coating on said internal wall, this layer forming an impression of defined geometry, and
- at least one attachment means suitable for maintaining said composite material on said internal wall of the cyclone (15), is placed joined to said internal wall, in the thickness of the impression prior to casting.

2. The process as claimed in claim 1, **characterized in that** the composite material is a composite construction material, preferably concrete.

3. The process as claimed in claim 2, **characterized in that** the concrete is a self-flow concrete.

4. The process as claimed in claim 3, **characterized in that** the Al₂O₃/SiO₂ ratio of the self-flow concrete varies from 9 to 12 and preferably from 10 to 11.

5. The process as claimed in the previous claims, **characterized in that** metal needles are added to the composite material.

6. The process as claimed in claim 5, **characterized in that** the proportion of metal needles in the composite material varies from 0.1 to 5.0 weight %, and preferably from 0.1 to 3.0 weight %.

7. The process as claimed in claims 5 or 6, **characterized in that** the length of the needles ranges from 30 to 80% and preferably from 50 to 80% of the thickness of the anti-erosion coating.

8. The process as claimed in claims 5 to 7, **characterized in that** the diameter of the needles ranges from 0.1 mm to 1.0 mm and preferably from 0.2 mm to 0.7 mm.

9. The process as claimed in the previous claims, **characterized in that** the thickness of the anti-erosion coating (18) varies from 10 mm to 100 mm and preferably from 10 to 50 mm.

10. The process as claimed in the previous claims, **characterized in that** the anti-erosion coating is anchored to the metal wall by at least one attachment means, for example at least one metal V (15), placed in the thickness (18) of said coating.

11. The process as claimed in claim 10, **characterized in that** the height of the V (15) varies from 50% to 80% and preferably from 60% to 75% of the thickness of the anti-erosion coating.

12. The process as claimed in claim 10, **characterized in that** the number of V's (15) varies from 10 to 100 per m² and preferably from 10 to 60 per m².

13. An anti-erosion coating positioned in a continuous layer of defined geometry on the internal wall of a cyclone of catalytic cracking unit with fluidized bed and having a smooth exposed surface, this anti-erosion coating consisting of a composite material, obtained from a self-flow concrete comprising an Al₂O₃/SiO₂ ratio varying from 9 to 12, and of at least one attachment means joined to said internal wall in the thickness of the coating.

14. The anti-erosion coating as claimed in claim 13, **characterized in that** it comprises from 0.1 to 5.0 weight % of metal needles, the length of which ranges from 30 to 80% of the thickness of the anti-erosion coating.

15. The anti-erosion coating as claimed in claim 13 or 14, **characterized in that** it is obtained as claimed in any one of claims 1 to 12.

16. A cyclone (1) for catalytic cracking units with fluidized bed, having an internal wall coated by a coating as defined in any one of claims 13 to 15.
